# EUROPEAN PATENT APPLICATION

(11) **EP 4 752 994 A1**
(43) Date of publication of application: **03.06.2026**
(21) Application number: 24215962.2
(22) Date of filing: 28.11.2024
(51) Int. Cl.: H01M 10/04, H01M 10/0583

(54) **AN APPARATUS AND A METHOD FOR MANUFACTURING AN ELECTRODE ASSEMBLY BY STACKING AND FOLDING, AND AN ELECTRODE ASSEMBLY MANUFACTURED EITHER BY THE APPARATUS OR THE METHOD**

(71) Applicant: LG Energy Solution, Ltd., Seoul 07335 (KR)
(72) Inventor: CHOI, Jin Hyeong, 34122 Daejeon (KR)
(74) Representative: BCKIP Part mbB

(57) **Abstract**

An apparatus for manufacturing an electrode assembly by stacking and folding includes a transfer unit conf igued to pick a respective one of a plurality of unit electrode cells and sequentially arrange on a longitudinal separator. The apparatus further includes a folding unit conf igured to fold the separatorhaving the plurality of unit electrode cells sequentially arranged thereon, along a longitudinal direction of the separator, thereby forming a folded stack cell, and at least one sealer conf igured for being applied to a side of the folded stack cell at which folded parts of the separator are exposed, wherein the sealer is conf igured to compress the exposed folded parts of the separator by exerting pressure on opposite sides thereof.

## Description

### TECHNICAL FIELD

The present invention relates to an apparatus and a method for manufacturing an electrode assembly by stacking and folding.

More particularly, the present invention relates to an apparatus and a method for manufacturing an electrode assembly by stacking and folding, which enhances energy density of the electrode assembly.

### BACKGROUND

Secondary batteries, or often called rechargeable batteries, can be discharged by being used and then restored to their original state by charging. Secondary batteries have recently been widely used as an energy source of wireless devices, such as a personal digital devices, mobile telephone, or notebook computer. Moreover, the secondary battery has attracted attention as an energy source of an electric vehicle, a hybrid electric vehicle, and the like, which are regarded as a solution to the air pollution problem caused by traditional gasoline or diesel vehicles using fossil fuel. Due to the apparent advantages of the secondary battery over other traditional energy sources, the application of secondary battery continuously becomes wider and the consumer's demands for the secondary battery is also increasing.

Among various secondary batteries, a lithium secondary battery is particularly widely used as an energy source for various electronic products because the lithium secondary battery shows a high energy density, a high operating voltage, as well as excellent storage and lifetime characteristics.

In the meantime, secondary batteries can be also classif ied based on a structure of an electrode assembly, which consists of a positive electrode, a separator, and a negative electrode. Typically, these assemblies fall into two categories firstly, a jelly-roll (or wound) electrode assembly, where long sheet-type positive and negative electrodes are wound together with separators in between, and secondly, a stack-type electrode assembly, where a plurality of positive electrodes and negative electrodes of a predetermined size are sequentially stacked on top of the other, having a separator interposed therebetween.

Various types of secondary batteries have been developed to meet the diverse and evolving needs of different applications and industries. Some applications require batteries with high energy density to store more energy in a smaller, lighter package.

Accordingly, it would be advantageous to develop a technology capable of addressing the above technical problem.

### SUMMARY OF THE INVENTION

It is an objective of the present invention to provide an improved apparatus for an electrode assembly by stacking and folding. The problem is at least partially solved or alleviated by the subject-matter of independent claims, wherein further examples are incorporated in dependent claims.

One aspect of the present invention relates to an apparatus for manufacturing an electrode assembly by stacking and folding. The apparatus may comprise: a transfer unit conf igured to pick a respective one of a plurality of unit electrode cells and sequentially arrange on a longitudinal separator; a folding unit conf igured to fold the separator, having the plurality of unit electrode cells sequentially arranged thereon, along a longitudinal direction of the separator, thereby forming a folded stack cell; and at least one sealer conf igured for being applied to a side of the folded stack cell at which folded parts of the separator are exposed, wherein the sealer is conf igured to compress the exposed folded parts of the separator by exerting pressure on opposite sides thereof.

The present invention can reduce a volume of the folded stack cell, thereby improving energy density of the electrode assembly comprising the folded stack cell.

According to an embodiment of the present invention, the apparatus may further include a cutter conf igured to cut off the compressed folded parts of the separator.

The above feature of the present invention brings about further reduction of a volume of the folded stack cell by removing the compressed folded part of the separator. The further reduced volume of the folded stack cell results in a further increased energy density of the electrode assembly.

According to an embodiment of the present invention, the sealer may be conf igured to apply heat and pressure to the exposed folded parts of the separator.

Accordingly, the present invention can effectively seal the exposed parts of the separator by applying pressure and heat.

According to an embodiment of the present invention, the sealer may comprise two pieces that are conf igured for being applied to the exposed folded parts of the separator from opposing directions.

Therefore, a compressed folded portion can be formed at various positions as desired, depending on a structure of the stack cell.

According to an embodiment of the present invention, at least one sealer may comprise a pair of sealers conf igured to be simultaneously applied at opposite sides of the folded stack cell at which folded parts of the separator are exposed.

This conf iguration canreduce the time required for the electrode assembly manufacturing process, thereby improving the throughput.

A further aspect of the present invention is directed to a method for manufacturing an electrode assembly by stacking and folding. The method may include: 1) sequentially arranging a plurality of unit electrode cells on a longitudinal separator; 2) folding the separator, having the plurality of unit electrode cells sequentially arranged thereon, along a longitudinal direction of the separator, to thereby form a folded stack cell; and 3) compressing folded parts of the separator exposed at a side of the folded stack cell by exerting pressure on opposite sides thereof.

Accordingly, the present invention can reduce a volume of the folded stack cell and improve energy density of the electrode assembly comprising the folded stack cell

According to an embodiment of the present invention, the method may further include cutting off the compressed folded parts of the separator.

Therefore, the present invention achieves further reduction of a volume of the folded stack cell by removing the compressed folded part of the separator. The further reduced volume of the folded stack cell can additionally increase the energy density of the electrode assembly.

According to an embodiment of the present invention, in the compressing step, heat and pressure are applied to the exposed folded parts of the separator.

Therefore, the exposed parts of the separator can be effectively sealed by the pressure and heat.

According to an embodiment of the present invention, the compressing step is simultaneously performed at opposite sides of folded stack cell at which folded parts of the separator are exposed.

This allows a compressed folded portion to be formed at various positions as desired, depending on a structure of the stack cell.

According to another aspect of the present invention, an electrode assembly including a stack cell is provided that is manufactured by using either the apparatus or the method for manufacturing an electrode assembly by stacking and folding. The stack cell may include: a plurality of unit electrode cells, each unit electrode cell including a positive electrode, a negative electrode, and a separator interposed therebetween; and a plurality of separator layers, each separator layer being disposed between two neighboring unit electrode cells, wherein the separator layers have lengths different from each other along a direction perpendicular to a direction electrode tabs of the stack cell extend.

The electrode assembly in accordance with the present invention shows an improved energy density due to a reduced volume of the folded stack cell.

According to an embodiment of the present invention, the separator may have a binder applied thereon and are adhered to each other at sides of the stack cell.

Addition of the binder enables easy sealing of the exposed folded parts of the separator using less energy.

When manufacturing an electrode assembly by using the apparatus or the method in accordance with the present invention, the electrode assembly shows an improved energy density, due to a reduced volume of the folded stack cell comprised therein, while the total amount of energy the electrode assembly can contain is maintained.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specif ied in the schematic f igures of the drawings, in which:
- Fig. 1: schematically illustrates a unit electrode cell in accordance with the related art;
- Figs. 2a and 2b: schematically illustrate an apparatus for manufacturing an electrode assembly by stacking and folding in accordance with the related art;
- Fig. 3: schematically illustrates a folded stack cell in its cross-sectional view, taken along the direction A-A' in Fig. 2a;
- Fig. 4: schematically illustrates a folded stack cell in its cross-sectional view, taken along the direction B-B' in Fig. 2b;
- Figs. 5a and 5b: schematically illustrate an apparatus for manufacturing electrode assembly by stacking and folding in accordance with an embodiment of the present invention.
- Figs. 6: schematically illustrate an apparatus for manufacturing electrode assembly by stacking and folding in accordance with an embodiment of the present invention.
- Fig. 7: schematically illustrate a folded stack cell manufactured by using either the apparatus or the method in accordance with an embodiment of the present invention.

### DETAILED DESCRIPTION OF EXEMPLARY EMBODIMENTS

Terms or words used in the present description and claims should not be restrictively interpreted as ordinary meanings or dictionary-based meanings, but should be interpreted as meanings and concepts consistent with the technical ideas of the present invention in the broadest possible way.

In the present disclosure, it should be understood that terms "comprises", "includes", "has", etc. specify the presence of stated features, numbers, steps, operations, elements, components, or combinations thereof, but do not preclude the presence or addition of one or more other features, numbers, steps, operations, elements, components, or combinations thereof.

Also, when a portion such as a layer, a f ilm, an area, aplate, or the like is referred to as being "on" another portion, this includes not only the case in which the portion is "directly on" the another portion, but also the case in which still another portion is interposed therebetween. In contrast, when a portion such as a layer, a f ilm, an area, a plate, or the like is referred to as being "below" another portion, this includes not only the case in which the portion is "directly below" the another portion, but also the case in which still another portion is interposed therebetween. In addition, to be disposed "on" in the present disclosure may include the case disposed at the lower portion as well as the upper portion.

Terms such as "f irst" and "second" may be used to describe various components, but the components should not be limited by the terms. The terms are used only for the purpose of distinguishing one component from another. For example, without departing from the scope of the present invention, a f irst component may be referred to as a second component, and similarly, the second component may also be referred to as the first component. Singular expressions include plural expressions unless the context clearly indicates otherwise.

In addition, the same reference numbers will be used throughout the drawings to refer to parts that perform similar functions or operations. In the case in which one part is said to be connected to another part in this disclosure, not only may the one part be directly connected to the other part, but also the one part may be indirectly connected to the other part via a further part. In addition, that a certain element is included does not mean that other elements are excluded, but means that such elements may be further included unless mentioned otherwise.

Hereinafter, an apparatus and a method for manufacturing an electrode assembly by stacking and folding in accordance with the present invention will be described in detail with reference to the accompanying drawings.

An electrode assembly may consist of a positive electrode, a separator, and a negative electrode.

The positive and the negative electrode may be manufactured as a form of sheet, respectively. An electrode sheet may have a structure in which an electrode mixture layer is coated on one side or both sides of a current collector layer.

The electrode mixture layer may be a slurry containing an active material, a binder, and a solvent, wherein the binder helps to hold the active material particles together and adhere them to the current collector layer. The active materials are components that undergo electrochemical reactions to store and release energy during the charge and discharge cycles in the secondary battery. For example, one or more of lithium cobalt oxide, lithium manganese oxide, lithium iron phosphate, nickel manganese, and nickel cobalt aluminum oxide may be used as a positive active material. For example, one or more of graphite, lithium titanate, and silicon-based materials may be used as a negative active material.

The current collector layer may be a thin metal foil designed to conduct electric current between an electrochemical active material and an external circuit of the battery. For example, an aluminum layer may be used for the positive current collector, while a copper layer may be used for the negative current collector. An additional coating layer may be coated on the current collector layer to improve adhesion with the active materials, enhancing corrosion resistance and/or reducing electrical resistance.

The electrode mixture layer may be coated on the current collector layer to a desired thickness in a desired area. The coated portion may be positioned in the middle of the electrode sheet along its width, so that uncoated portions may be positioned, e.g., at both sides of the coated portion. Various methods may be used for the coating process. For example, the slurry may be spread evenly by a blade across the surface of the current collector layer. The slurry may be extruded through a narrow slot die onto the moving current collector layer. The current collector may be dipped into the slurry and then withdrawn at a controlled speed. Otherwise, the slurry may be atomized and sprayed onto the current collector.

After coating the electrode mixture layer on the current collector layer, a process for increasing density of the coated electrode mixture layer is performed, typically being called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

A separator, which is composed of thin and porous materials, is prepared. The separator is for physically isolating the positive and negative electrodes from each other while allowing a f low of ions between them. The separator prevents short circuits, allows ion f lows, and ensures mechanical stability by supporting an electrode assembly, helping to maintain the integrity of the battery's internal structure during operation. The material of the separator requires properties of chemical stability, mechanical strength, and low cost. It may further require a relatively low melting point, which can provide a safety mechanism by shutting down the battery if it overheats. For example, a thin Polypropylene (PP) layer, a thin layer of ceramic coated separator layer, a nonwoven fabric layer, or a composite layer of different materials, such as polymers and ceramic, may be used to optimize the performance characteristics like mechanical strength, thermal stability, and electrolyte wettability. The selection of separator depends on the specific requirements of specif ication of a secondary battery

Cutting of the dried electrode sheet and the separator is performed for stack-type electrode assembly The dried electrode sheets are cut into precise shapes and sizes suitable for stacking, and the separators are also cut to match the size of the electrode sheet.

The positive electrode, separator, and negative electrode are alternatively stacked in a precise order. This creates a layered structure where each positive electrode is separated from the negative electrode by a separator. Stacking of electrodes may have various designs. For example, a bi-cell design, where two electrode layers (typically a positive and a negative) share a common current collector layer, is used as a unit cell for stack-type electrode assembly. A full cell design consisting of fully assembled positive electrode, negative electrode, separator, and electrolyte may also be used as a unit cell for stack-type electrode assembly.

However, a sequential stacking process takes a large amount of time and effort, resulting in a low productivity. In order to solve this problem, a stacking and folding type electrode assembly has been developed. The stacking and folding type electrode assembly has a structure in which bi-cells or full cells are stacked on top of one another having a folded, long continuous separator sheet interposed therebetween.

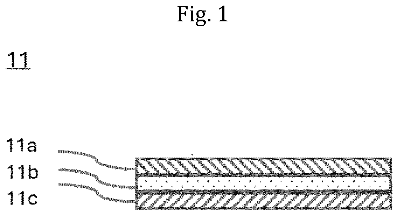

Fig. 1 schematically illustrates an exemplary unit electrode cell 11 having a laminated structure of a positive electrode 11a/a negative electrode 11c/a separator 11b. However, the laminated structure of a unit electrode cell 11 is not limited thereto. The unit electrode cell 11 may have different laminated structures. For example, the unit electrode cell 11 may be an A-type bi-cell which is a laminate of a positive electrode/a separator/a negative electrode/a separator/a positive electrode or a C-type bi-cell which is a laminate of a negative electrode/separator/a positive electrode/a separator/a negative electrode. The unit electrode cell 11 may also be a Mono-cell, a laminate of a positive electrode/a separator/a negative electrode/a separator, or a Half-cell, a laminate of a separator/a negative (or positive) electrode/a separator.

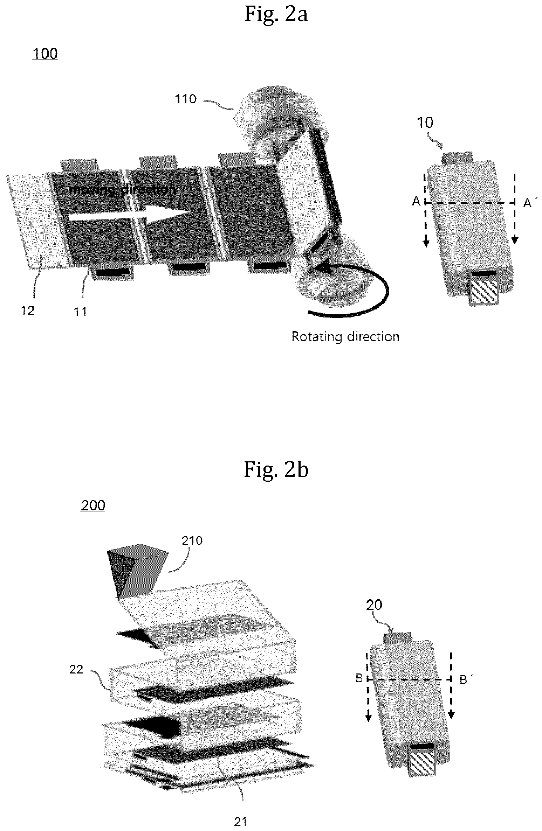

Figs. 2a and 2b respectively illustrate two different types of stacking and folding apparatuses 100, 200.

Fig. 2a shows a plurality of unit electrode cells 11 sequentially arranged on a longitudinal separator 12. The unit electrode cell 11 may have, for example, a laminated structure of A-type bi-cell, C-type bi-cell, or combination thereof. However, the laminated structure of the unit electrode cell 11 is not limited thereto. A folding unit 110 is conf igured tofold the separator 12, having the plurality of unit electrode cells 11 sequentially arranged thereon, along its longitudinal direction, thereby obtaining a folded stack cell 10. Folding the separator 12 may be carried out by rotating the folding unit 110 in either a clockwise or count clockwise direction.

Referring to Fig. 2b, a transfer unit (not shown) is conf igured topick up a plurality of unit electrode cells 21 one by one and sequentially arrange on a longitudinal, folded, separator 22. A folding unit 210 is conf igured to once a unit electrode cell 21 is positioned on top of the separator 22 by the transfer unit, fold the separator 22 so as to cover the unit electrode cell 21 positioned on top. Upon stacking of the subsequent unit electrode 21, the folding unit 210 again folds over the separator 22 above the newly staked unit electrode 21. This time, however, the folding direction is opposite to the previous folding. In other words, the folding operation is performed, for example, once from the left to the right side, and the next time from the right to the left side. By way of repeating this stacking and folding operation, a folded stack cell 20 can be manufactured.

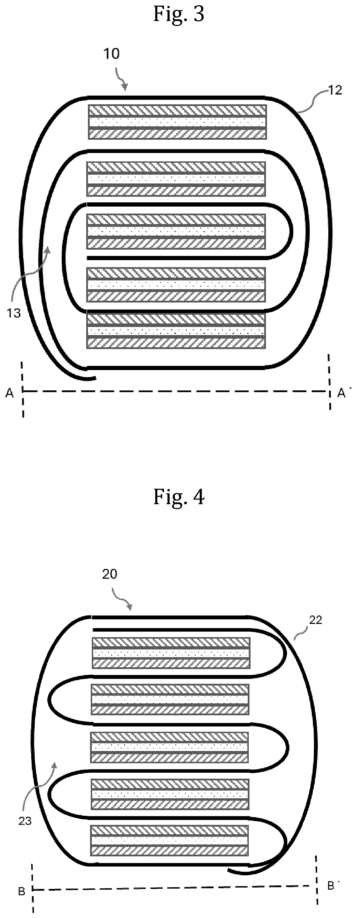

Figs 3 and 4 schematically illustrate cross-sectional views of the folded stack cell 10, 20, respectively manufactured by using the two different types of stacking and folding apparatuses 100, 200 shown in Figs. 2a and 2b. The cross-sections are respectively taken along the directions A-A' and B-B' indicated in Figs. 2a and 2b.

Referring to Figs. 3 and 4, it can be noticed that each folded part of the separator 12, 22 covering at least a part of the side surface of the folded stack cell 10, 20 may unnecessarily take up a certain volume of space, leaving an empty space 13, 23 formed within the folded stack cell 10, 20. The larger the empty space 13, 23 is, the lower the energy density of the electrode assembly comprising the corresponding folded stack cell 10, 20 becomes.

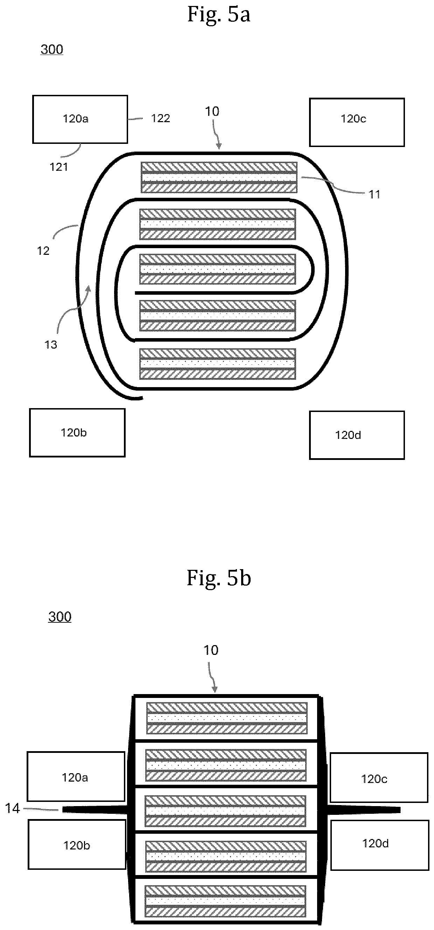

In order to increase an energy density of the electrode assembly, the present invention provides an improved stacking and folding apparatus 300, which can reduce a volume of the folded stack cell 10, 20. A stacking and folding apparatus 300 may employ at least one sealer 120a as shown in figs. 5a and 5b, in accordance with the present invention.

Referring to figs. 5a and 5b,the at least one sealer 120a is conf igured for being applied to a side of the folded stack cell 10 at which folded parts of the separator 12 are exposed The side may be positioned perpendicular to the stacking direction of the folded stack cell 10. The sealer 120a is conf igured to compress the exposed folded parts of the separator 12 by exerting pressure on opposite sides thereof. While the sealer 120a exerts the pressure on one side of the exposed folded parts of the separator 12, the opposite side may be supported by a fixed structure, such as a table having a flat surface (not shown).

Fig. 5a schematically illustrates a stacking and folding apparatus 300 and a folded stack cell 10 before the apparatus 300 exerts pressure to the exposed folded parts of the separator 12. In the meantime, Fig 5b schematically illustrates the stacking and folding apparatus 300 and the folded stack cell 10 while the apparatus 300 exerts pressure to the folded stack cell 10.

The sealer 120a may have a f irstf lat surface121 for exerting a uniform pressure on the exposed folded parts of the separator 12. The sealer 120a may preferably further have a second flat surface 122for facing the side surface of the folded stack cell 10 at which the exposed folded parts of the separator 12 are positioned. During the compression operation, the second flat surface 122allows the sealer 120a to be positioned close to the side surface of the electrode cell 11. An edge formed by the first flat surface 121 and the second flat surface 122 may preferably have a right angle. As a pressure is exerted by moving the sealer 120a along the side surface of the folded stack cell 10, the empty space 13 gets smaller, and the exposed folded parts of the separator 12 form, in the end, a compressed folded part 14, as shown in Fig. 5b.

Preferably, the sealer 120a may be conf igured to apply heat and pressure to the exposed folded parts of the separator 12. The heat may be applied by a heater (not shown) incorporated in the sealer 120a. The heat and pressure may enable smooth gathering of the exposed folded parts of the separator 12. Furthermore, the separator 12 may show an adhesive property due to a binder applied thereon. The heat, the binder, or both in combination may keep the folded parts of the separator 12 stick together, thereby having the compressed folded part 14 maintain its reduced size. When heat is applied, a chemical reaction between the folded parts of the separator 12 may occur, allowing multiple layers of the folded parts of the separator 12 adhered together.

According to an embodiment, the sealer may comprise two separate pieces 120a, 120b that are conf igured for being applied to the exposed folded parts of the separator 12 from opposite directions. If required, e.g., by the conf iguration of thefolded stack cell 10, the sealers 120a, 120b may be conf igured tomove independently. The sealers 120a, 120b may move towards each other from opposite directions, while keeping the second flat surfaces 122 thereof as close as possible to the side surface of the folded stack cell 10 at which the exposed folded parts of the separator 12 are positioned. When the sealers 120a, 120b meet each other while moving along the side surface of the folded stack cell 10, a pressure, preferably along with heat, is exerted to the exposed folded parts of the separator 12, to thereby form the compressed folded part 14, as shown in fig. 5b. However, the embodiment is not limited thereto. The compressed folded part 14 may not be necessarily formed midway along the side surface of the folded stack cell 10. For example, the sealers 120a, 120b may form the compressed folded part 14 closer to a top or a bottom of the folded stack cell 10 (not shown). The sealers 120a, 120b may form more than one compressed folded part, if a specif ic conf igurationof the folded stack cell so requires.

In the meantime, the stacking and folding apparatus 300 may further comprise another pair of sealers 120c, 120d conf igured to be simultaneously applied at opposite sides of the folded stack cell 10 at which folded parts of the separator 12 are exposed. This may reduce the time required for the electrode assembly manufacturing process, thereby improving the throughput.

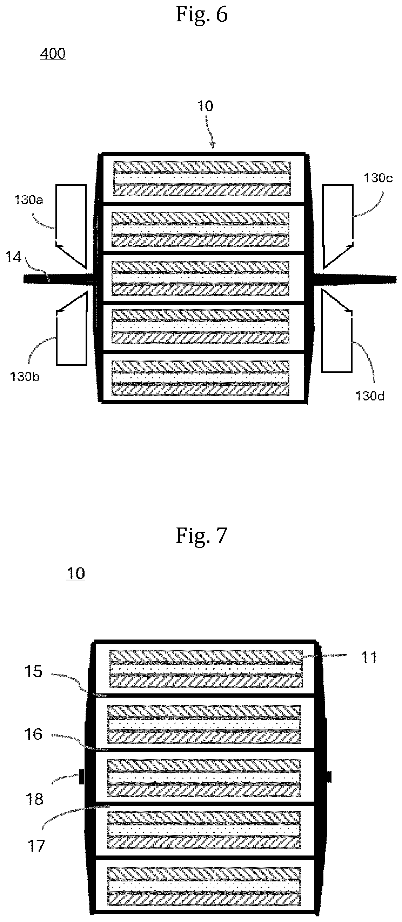

Referring to Fig. 6, a stacking and folding apparatus 400 in accordance with an embodiment of the present invention may have a cutter conf igured to cut off the compressed folded parts 14 of the separator 12. The cutter may comprise two pieces 130a, 130b that form a pair and are conf igured for being applied to the compressed folded part 14 formed at one side of the folded stack cell 10. The cutter may further comprise another pair of cutters 130c, 130d at the opposite side of the folded stack cell 10, as shown in fig. 6. The provision of an additional pair of cutters apparently reduces the time required for the electrode assembly manufacturing process, thereby improving the throughput.

A further aspect of the present invention relates to a method for manufacturing an electrode assembly by stacking and folding. A plurality of unit electrode cells 11 may be arranged on a longitudinal separator 12. The separator 12, having the plurality of unit electrode cells 12 sequentially arranged thereon, may be folded along its longitudinal direction, to thereby form a folded stack cell 10, 20. Folded parts of the separator 12, which are exposed at a side of the folded stack cell 10, 20 are compressed by sealers 120a, 120b, 120c, 120d exerting pressure from opposite sides thereof.

Heat and pressure may be applied to the exposed folded parts of the separator 12 during the compressing step.

The compressing step may be simultaneously performed at opposite sides of the folded stack cell at which folded parts of the separator 12 are exposed.

The method according to the present invention may further include a step of cutting off the compressed folded part 14 of the separator 12, to thereby further reduce the size of the folded stack cell 10, 20.

According to the present invention, an electrode assembly including the folded stack cell 10, 20 may be manufactured by using either the stacking and folding apparatus 300, 400, or the method described in detailed above.

Making reference to Fig. 7, the stack cell 10 manufactured by using either the apparatus or the method in accordance with the present invention may include a plurality of unit electrode cells 11 stacked on top of one another. Each unit electrode cell 11 may include at least a positive electrode, a negative electrode, and/or a separator interposed therebetween.

The stack cell 10 may further include a plurality of separator layers 15, 16, 17, each of which is disposed between two neighboring unit electrode cells 11. The separator layers 15, 16, 17 have lengths different from each other along a direction perpendicular to a direction electrode tabs of the stack cell 10 extend.

This difference in the lengths of the separator layers 15, 16, 17 results from the position of forming/cutting-off of the compressed folded part 14 of the separator 12, along the side surface of the folded stack cell 10. Assuming that the compressed folded part 14 has been cut off midway along the side surface of the folded stack cell 10, the length of the separator layer 15, which is disposed more distant from the compressed folded part 14, may be longer than the length of the separator layer 16, disposed closer to the compressed folder part 14. As the respective separator layer is disposed closer to the cut position 18 of the compressed folded part 14, its length becomes shorter. As already explained, the cut position 18 of the compressed folded part 14 may be midway the stack cell 10, along its side surface. However, the embodiment is not limited thereto. The compressed folded part 14 may be formed and cut off at different positions of the stack cell 10. In such cases, the length of the respective separator layers will become different depending on the cut position 18 of the compressed folded part 14.

The separator layers 15, 16, 17 disposed between neighboring unit electrode cells 11 may comprise the same material as the separator comprised in the unit electrode cell 11. The separator comprised in the unit electrode cell 11 may be, for example, a thin insulating film with high ion permeabilityIt may have a pore with a diameter of 0.01 µm to 10 µm. The thickness of the separator may be 5 µm to 300 µm. On the other hand, the separator layers 15, 16, 17 disposed between unit electrode cells 11 may be thicker than the separator comprised in the unit electrode cell 11.

The separator layers 15, 16, 17, due to a binder applied thereon, may be adhered to each other at sides of the stack cell 10.

The binder may be coated on at least a part of a surface of the separator 15, 16, 17. The binder may be independently selected from the group consisting of polyvinylidene f luorideco-hexaf luoropropylene, polyvinylidene fluoride cotichloroethylene, Polyolef ins such as polymethylmethacrylate, polyacrylonitrile, polyvinylpyrrolidone, polyvinylacetate, polyethylene-co-vinyl acetate, polyethylene oxide. But not being limited thereto, polyethylene oxide, cellulose acetate, cellulose acetate butyrate, cellulose acetate propionate, cyanoethylpullulan, cyanoethylpolyvinylalcohol, Cyanoethylcellulose, Cyanoethylsucrose, pullulan, carboxyl methyl cellulose, acrylonitrile-styrene-butadiene copolymer, and polyimide may be selected.

Although specif ic embodiments have been illustrated and described herein, it will be appreciated by those of ordinary skill in the art that a variety of alternate and/or equivalent implementations exist. It should be appreciated that the exemplary embodiments are only examples, and are not intended to limit the scope, applicability, or conf iguration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specif ic embodiments discussed herein.

### LIST OF REFERENCE SIGNS

10, 20 folded stack cell
11, 21 unit electrode cell
11a positive electrode
11b separator
11c negative electrode
12, 22 longitudinal separator layer
13,23 space
14 compressed folded part
15, 16, 17 separator layers
18 cut position of the compressed folded parts
100, 200, 300, 400 stacking and folding apparatus
110, 210 folding unit
120a, 120b, 120c, 120d sealer
130a, 130b, 130c, 130d cutter

## Claims

1. An apparatus for manufacturing an electrode assembly by stacking and folding, comprising:
a transfer unit conf igued to pick a respective one of a plurality of unit electrode cells and sequentially arrange on a longitudinal separator;
a folding unit conf igured to fold the separatorhaving the plurality of unit electrode cells sequentially arranged thereon, along a longitudinal direction of the separator, thereby forming a folded stack cell; and
at least one sealer conf igured for being applied to a side of the folded stack cell at which folded parts of the separator are exposed, wherein the sealer is conf igured to compress the exposed folded parts of the separator by exerting pressure on opposite sides thereof.

2. The apparatus of claim 1, further comprising a cutter conf igured to cutoff the compressed folded parts of the separator.

3. The apparatus of claim 1 or 2, wherein the sealer is conf igured to apply heat and pressure to the exposed folded parts of the separator.

4. The apparatus of any one of the preceding claims, wherein the sealer comprises two pieces that are conf igured for being applied to the exposed folded parts of the separator from opposing directions.

5. The apparatus of any one of the preceding claims, wherein the at least one sealer comprises a pair of sealers conf igured to be simultaneously applied at opposite sides of the folded stack cell at which folded parts of the separator are exposed.

6. A method for manufacturing an electrode assembly by stacking and folding, comprising:
sequentially arranging a plurality of unit electrode cells on a longitudinal separator;
folding the separator, having the plurality of unit electrode cells sequentially arranged thereon, along a longitudinal direction of the separator, to thereby form a folded stack cell; and
compressing folded parts of the separator exposed at a side of the folded stack cell by exerting pressure on opposite sides thereof.

7. The method of claim 6, further comprising cutting off the compressed folded parts of the separator.

8. The method of claim 6 or 7, wherein, in the compressing step, heat and pressure are applied to the exposed folded parts of the separator.

9. The apparatus of any one of claims 6 to 8, wherein the compressing step is simultaneously performed at opposite sides of the folded stack cell at which folded parts of the separator are exposed.

10. An electrode assembly including a stack cell manufactured by using either the apparatus of any one of claims 2 to 5, insofar as dependent upon claim 2, or the method of any one of claims 6 to 9, insofar as dependent upon claim 7, the stack cell comprising:
a plurality of unit electrode cells, each unit electrode cell including a positive electrode, a negative electrode, and/or a separator interposed therebetween; and
a plurality of separator layers, each separator layer being disposed between two neighboring unit electrode cells,
wherein the separator layers have lengths different from each other along a direction perpendicular to a direction electrode tabs of the stack cell extend.

11. The electrode assembly of claim 10, wherein the separator layers have a binder applied thereon and are adhered to each other at sides of the stack cell.

## Amended claims

### Amended claims in accordance with Rule 137(2) EPC.

1. An apparatus (300) for manufacturing an electrode assembly by stacking and folding, comprising:
a transfer unit configured to pick a respective one of a plurality of unit electrode cells (11, 21) and to sequentially arrange the unit electrode cells (11, 21) on a longitudinal separator (12, 22);
a folding unit (110, 210) configured to fold the separator (12, 22), having the plurality of unit electrode cells (11, 21) sequentially arranged thereon, along a longitudinal direction of the separator (12, 22), thereby forming a folded stack cell (10, 20);
at least one sealer (120a) configured for being applied to a side of the folded stack cell (10, 20) at which folded parts of the separator (12, 22) are exposed, wherein the sealer (120a) is configured to compress the exposed folded parts of the separator (12, 22) by exerting pressure on opposite sides thereof; and
a cutter (130a) configured to cut off the compressed folded parts (14) of the separator (12, 22).

2. The apparatus (300) of claim 1, wherein the sealer (120a) is configured to apply heat and pressure to the exposed folded parts of the separator (12, 22).

3. The apparatus (300) of any one of the preceding claims, wherein the sealer (120a, 120b) comprises two pieces that are configured for being applied to the exposed folded parts of the separator (12, 22) from opposing directions.

4. The apparatus (300) of any one of the preceding claims, wherein the at least one sealer (120a, 120b, 120c, 120d) comprises a pair of sealers configured to be simultaneously applied at opposite sides of the folded stack cell (10, 20) at which folded parts of the separator (12, 22) are exposed.

5. A method for manufacturing an electrode assembly by stacking and folding, comprising:
sequentially arranging a plurality of unit electrode cells (11, 21) on a longitudinal separator (12, 22);
folding the separator (12, 22), having the plurality of unit electrode cells (11, 21) sequentially arranged thereon, along a longitudinal direction of the separator (12, 22), to thereby form a folded stack cell (10, 20);
compressing folded parts of the separator (12, 22) exposed at a side of the folded stack cell (10, 20) by exerting pressure on opposite sides thereof; and
cutting off the compressed folded parts (14) of the separator (12, 22).

6. The method of claim 5, wherein, in the compressing step, heat and pressure are applied to the exposed folded parts of the separator (12, 22).

7. The method of any one of claims 5 or 6 , wherein the compressing step is simultaneously performed at opposite sides of the folded stack cell (10, 20) at which folded parts of the separator (12, 22) are exposed.

8. An electrode assembly including a folded stack cell (10, 20), the stack cell (10, 20) comprising:
a plurality of unit electrode cells (11, 21), each unit electrode cell (11, 21) including a positive electrode (11a), a negative electrode (11c), and/or a separator (11b) interposed therebetween; and
a plurality of separator layers (15, 16, 17), each separator layer (15, 16, 17) being disposed between two neighboring unit electrode cells (11, 21),
wherein the separator layers (15, 16, 17) have lengths different from each other along a direction perpendicular to a direction electrode tabs of the folded stack cell (10 , 20) extend.

9. The electrode assembly of claim 8, wherein the separator layers (15, 16, 17) have a binder applied thereon and are adhered to each other at sides of the folded stack cell (10, 20).
